# EUROPÄISCHE PATENTSCHRIFT

(11) **EP 1 771 297 B1**
(45) Veröffentlichungstag und Bekanntmachung des Hinweises auf die Patenterteilung: **09.06.2010**
(21) Anmeldenummer: 05754375.3
(22) Anmeldetag: 30.06.2005
(51) Int. Cl.: B32B 3/00, B32B 15/10, E04C 2/00

(54) **SCHALEN-/PLATTENFÖRMIGES BAUELEMENT, BESTEHENT AUS EINER ERSTEN SCHICHT, EINER ZWISCHENSCHICHT SOWIE EINER ZWEITEN SCHICHT**
DISH-SHAPED/PLATE-SHAPED COMPONENT
ELEMENT EN FORME DE CUVETTE/DE PLAQUE

(30) Priorität: 07.07.2004 AT 11512004
(43) Veröffentlichungstag der Anmeldung: 11.04.2007
(73) Patentinhaber: Siemens AG Österreich, 1210 Wien (AT)
(72) Erfinder: MOSER, Gerhard, A-2380 Perchtoldsdorf (AT)
(74) Vertreter: Peham, Alois
(86) Internationale Anmeldenummer: PCT/AT2005/000246
(87) Internationale Veröffentlichungsnummer: WO 2006/002451

(56) Entgegenhaltungen:
- EP-A- 0 297 552

## Beschreibung

Die Erfindung bezieht sich auf ein schalen-/plattenförmiges Bauelement, bestehend aus einer ersten Schicht, einer Zwischenschicht sowie einer zweiten Schicht.

Bauelemente dieser Art, auch Strukturbauteile genannt, werden speziell im Fahrzeugbau verwendet. Dabei sind auch Bauweisen bekannt geworden, nämlich sogenannte Sandwichkonstruktionen, bei welchen eine erste Schicht aus Metallblech oder einem Metallprofil dem Aufbau den größten Teil der Festigkeit verleiht. Diese Schicht ist bei Fahrzeugen, z. B. Eisenbahnwagen, meist die Außenschicht. Auf diese folgt die Zwischenschicht, welche vorrangig der Wärmeisolierung und/ oder der Schalldämmung dient. Diese Innenschicht dient meist als Innenverkleidung, der oft vorrangig eine Dekorfunktion zukommt. Die einzelnen Schichten sind stoffschlüssig miteinander verbunden, z. B. durch Kleben.

Es ist bekannt, dass Klebeverbindungen aufgrund chemisch/physikalischer Alterung zur Delamination neigen - ein Vorgang, der of erst nach vielen Jahren auftritt. Im Eisenbahnbau mit Fahrzeuglebensdauer von 30 Jahren und mehr, führen die bekannten Bauelemente zu Problemen, sodass man auf andere, teurere Bauelemente ausweichen muss, bei welchen aber oft die gewünschte thermische Entkopplung zwischen Innen- und Außenschicht nicht gegeben ist.

Die EP 0297 552 zeigt ein aus drei Schichten aufgebautes Bauelement, wobei zwei äußere als Profile ausgebildete Schichten durch eine dünne elektrisch isolierende Innenschicht voneinander getrennt sind. Die beiden äußeren Profile weisen einander hintergreifende eine Schwalbenschwanzverbindungen bildende Halteabschnitte auf, dringen jedoch bauartbedingt nicht in die Innenschicht ein, sondern liegen an der Grenzfläche der Innenschicht an. Die bekannte Ausführungsform eignet sich bauartbedingt nicht gut für die Ausbildung der Zwischenschicht als eine thermisch- oder schallisolierenden Schicht, da hierbei größere Schichtdicken zum Einsatz kommen, was zu einer wesentlichen Beeinträchtigung der mechanischen Eigenschaften des Bauelementes führen würde.

Eine Aufgabe der Erfindung liegt in der Schaffung eines Bauelementes, z. B. für Eisenbahnfahrzeuge, welches bei geringem Gewicht und/oder niedriger Wanddicke alterungsbeständige Festigkeits- und Isoliereigenschaften aufweist.

Diese Aufgabe wird mit einem Bauelement der eingangs genannten Art gelöst, bei welchem erfindungsgemäß die erste und die zweite Schicht ein Profil mit in die Innenschicht ragenden Verankerungen ist, die der ersten Schicht zugehörigen Verankerungen abschnittsweise hintergreifen und der Raum zwischen den Profilen und deren Verankerungen mit einem in sich festen, zusammenhängenden Material gefüllt ist.

Die Erfindung schafft ein Bauelement, das multifunktional genutzt werden kann und die Integration einer Isolierung und von Innenverkleidungen ohne die Nachteile einer ausschließlich stoffschlüssigen Verbindung ermöglicht. Durch das Hintergreifen der Verankerungen wird eine besonders gute Verbindung zwischen erster und zweiter Schicht geschaffen, ohne dass es jedoch zu Wärmebrücken durch die Verankerungen kommt.

Eine sehr gute gegenseitige Verankerung ergibt sich, wenn die Verankerungen von den Profilen nach innen ragende Fußstege besitzen, die an ihren inneren Ende Haltstege aufweisen, die einander wechselseitig hintergreifen, wobei es zweckmäßig ist, falls die Haltestege beidseitig von den inneren Enden der Fußstege abstehen.

In Hinblick auf die dem Bauelement inhärente Festigkeit kann vorgesehen sein, dass das Metallprofil ein offenes Profil mit im wesentlichen glatten/ebenen Außenflächen ist, d. h. man muss nicht zu teueren Hohlprofilen greifen.

Sehr gute Isoliereigenschaften ergeben sich, falls der Raum zwischen den Profilen mit einem zwischen die Profile eingebrachten und darin ausgehärteten Kunststoffschaum besteht.

Andererseits erzielt man auch gut Festigkeitswerte bei geringem Gewicht, wenn der Raum zwischen den Profilen mit einem zwischen die Profile eingebrachten und darin ausgehärteten Aluminiumschaum besteht.

In Hinblick auf die im Fahrzeugbau meist gewünschten Festigkeitsanforderungen kann es empfehlenswert sein, wenn zumindest eines der Profile aus Metall besteht, insbesondere wenn zumindest eines der Profile aus rostfreiem Stahl besteht.

Eine andere in vielen Fällen zweckmäßige, weil kostengünstige und leichte Variante sieht vor, dass zumindest eines der Profile aus Aluminium oder einer Aluminiumlegierung besteht.

Besonders im Fahrzeugbau kann es vorteilhaft sein, wenn das Profil der ersten Schicht aus einem anderen Material besteht als das Profil der zweiten Schicht, wobei in den meisten Fällen, jedoch nicht zwingend, die Außenschicht eine Metallschicht und die Innenschicht eine Kunststoffschicht ist.

Die Erfindung samt weiteren Vorteilen ist im Folgenden anhand beispielsweiser Ausführungen näher erläutert, die in der Zeichnung veranschaulicht sind. In dieser zeigen:
Fig. 1 eine erste Ausführungsform eines plattenförmigen Bauelements nach der Erfindung in perspektivischer Teilansicht.
Fig. 2 in einer Ansicht wie Fig. 1 eine zweite Ausführungsform der Erfindung in schalenförmiger Gestalt und die
Fig. 3 bis 7 je in einem Teilschnitt weitere Ausführungsformen erfindungsgemäßer Bauelemente.

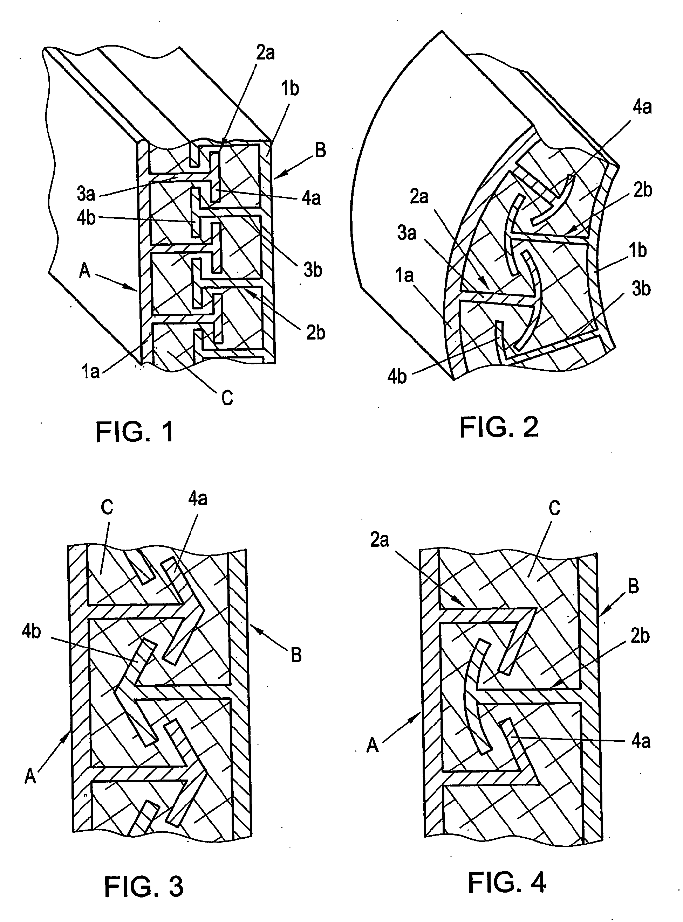

Das in Fig. 1 gezeigte Bauelement besteht prinzipiell aus drei Schichten, nämlich einer ersten Schicht A, einer zweiten Schicht B und einer dazwischen liegenden Zwischenschicht C.

Die erste Schicht a ist als Profil 1a, z.B. aus einer Aluminiumlegierung, ausgebildet und weist hier eine glatte und ebene Außenfläche auf und es besitzt nach innen ragende Verankerungen 2a. Letztere bestehen aus von der Basis des Profils 1a abstehenden Fußstegen 3a, welche an ihren inneren Ende Haftstege 4a aufweisen, wobei jede Verankerung insgesamt eine T-Form zeigt.

Die der ersten Schicht A gegenüberliegende Schicht B ist gleichfalls ein Profil 1b und liegt spiegelbildlich zum ersten Profil 1a, wobei es bei dieser Ausführungsform völlig gleich wie jenes, d. h. auch mit gleichen Verankerungen 2b, wiederum bestehend aus Fußstegen 3b und Haltestegen 4b ist.

Für die Erfindung wesentlich ist der formschlüssige Verbund der drei Schichten A, B, C, wodurch das Bauelement nicht auf Klebeeigenschaften der meist aus Kunststoff bestehenden Schicht C bezüglich der Außenschichten A und B angewiesen ist, was jedoch nicht bedeuten soll, dass solche Klebeeigenschaften bei der erfindungsgemäßen Ausbildung nicht vorhanden sein sollen oder dürfen. Quer zu dem Bauelement auftretende Zugbelastungen können über die einander wechselseitig hintergreifenden Abschnitte der Verankerungen und das zwischen diesen liegende Kunststoffmaterial bestens aufgenommen werden, die durch diese Ausbildung Druckspannungsbereich im Kunststoffmaterial geschaffen werden. Natürlich soll die Zwischenschicht C in den meisten Fällen eine Wärmedämmung bilden, oft auch eine Schalldämmung. Wenn zwischen den Verankerungen 2a, 2b der Innen- und Außenschicht Kunststoffmaterial liegt, liegende keine wärmeleitenden Brücken vor.

Je nach Anwendungsbereich kann auch das Material für die Zwischenschicht C gewählt werden, wobei vor allem leicht in den Zwischenraum einbringbare und dort aushärtende Kunststoffschäume, z.B. Polymethanschaum, in Frage kommen, aber auch andere Materialien, wie z. B. Schaumaluminium. Produkte aus Schaumaluminium sind z.B. unter dem Markennamen ALULIGHT® (der Alulight International GmbH) bekannt. Ebenso sind nicht geschäumte Kunstharze etc. möglich.

Die Ausbildung nach Fig. 2 zeigt einen Teil eines schalenförmigen Bauelements, wobei das Außenprofil 1a und das Innenprofil 1b eine Krümmung in einer Richtung besitzen. Die Verankerungen 2a und 2b zeigen gleichfalls Fußstege 3a, 3b, doch sind hier die Haltestege 4a, 4b gekrümmt, sodass die Verankerungen pilzförmig erscheinen.

Ganz allgemein sei an dieser Stelle angemerkt, dass die beiden Profile 1a, 1b in jeder Hinsicht unterschiedlich sein können. Wenngleich in den meisten Fällen beide Profile 1a, 1b aus Metall bestehen, z. B. aus Aluminium oder einem rostfreien Stahl, wobei meist dem AußenProfil 1a die wesentlich tragende Funktion zukommt, könnte vor allem das Innenprofil auch aus einem Kunststoffmaterial bestehen, z. B. ein Glas- oder Karbonfaser verstärktes Material.

In den Fig. 3 bis 5 sind weitere Varianten hinsichtlich der Ausgestaltung der Haltestege gezeigt. Die Haltestege 4a, 4b nach Fig. 3 sind vergleichbar mit jenen nach Fig. 2, doch giebeldachartig.

Fig. 4 zeigt, dass die Verankerungen 2a, die zur ersten Schicht A gehören, anders ausgestaltet sein können, als jene Verankerungen 2b, die zur zweiten Schicht B gehören. So gleichen die Verankerungen 2a jenen nach Fig. 3, doch erstrecken sich die Haltestege 4a nur nach einer Seite. Die Verankerungen 2b gleichen hier jenen nach Fig. 2.

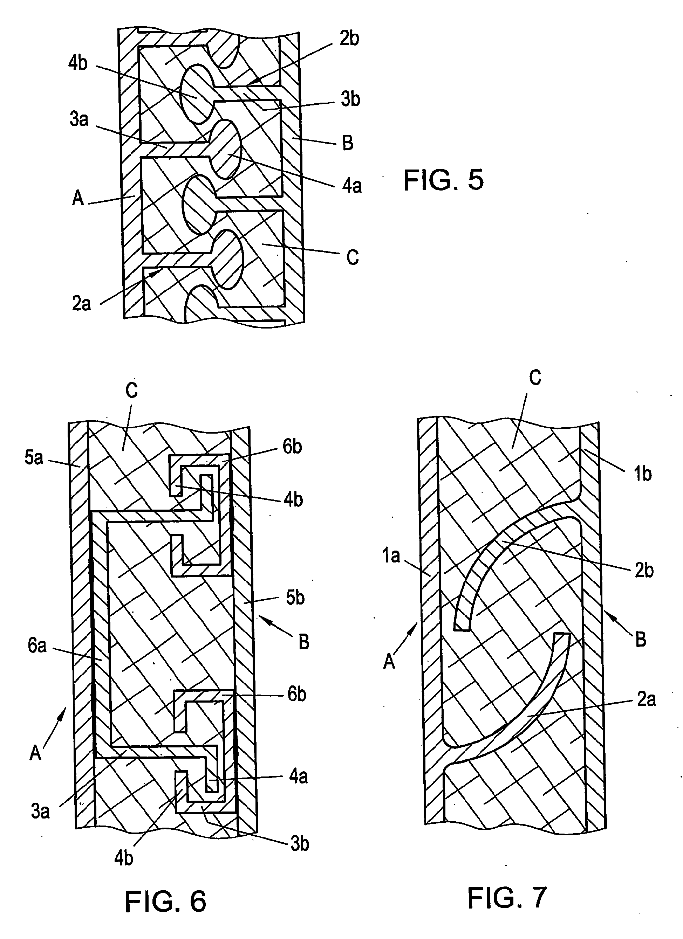

Die in Fig. 5 dargestellten Verankerungen 2a, 2b besitzen Haltestege 4a, 4b, die als Verdickungen oder Köpfe der Fußstege 3a, 3b aufgefasst werden können.

Fig. 6 illustriert, das die Verankerung keine einstückigen Bestandteile der ersten bzw. zweiten Schicht A bzw. B sein müssen. Eine Außenwand 5a ist an ihrer Innenseite - z.B. durch Schweißen - mit einem U-förmigen Profil 6a versehen, dessen Schenkel die Fußstege 3a bilden und an ihren Enden zu Haltestegen 4a umgebogen sind. Auch die zweite Schicht B ist ähnlich aufgebaut, nämlich als Außenwand 5b mit an ihrer Innenseite angeschweißten C-Profilen 6b, wobei letztere zu Haltestegen 4b umgebogene Enden besitzen. Zwischen diese Haltstege 4b greifen die Fußstege 3a, sodass wieder die Haltstege 4a, 4b einander wechselseitig hintergreifen.

Die Profile 1a, 1b der Ausführung nach Fig. 7 besitzen einstückig ausgebildete Verankerungen 1a, 1b, die gegensinnig gekrümmt sind und einander so gegenüberliegen, dass ihre Endabschnitte einander hintergreifen.

Es soll klar sein, dass vorgehend nur eine beschränkte Zahl möglicher Ausführungen gezeigt wurde und die Erfindung im Rahmen des beanspruchten Schutzes in vielen weiteren Varianten vorliegen kann, die nach Kenntnis der Erfindung vor einem Fachmann im Rahmen seines handwerklichen Könnens geschaffen werden können.

## Patentansprüche

1. Schalen-/plattenförmiges Bauelement, bestehend aus einer ersten Schicht (A), einer Zwischenschicht (C) sowie einer zweiten Schicht (B),
**dadurch gekennzeichnet, dass**
die erste (A) und die zweite (B) Schicht ein Profil (1a, 1b) mit in die Innenschicht (C) ragenden Verankerungen (2a, 2b) ist, die der ersten Schicht (A) zugehörigen Verankerungen (2b) abschnittsweise hintergreifen und der Raum zwischen den Profilen und deren Verankerungen mit einem in sich festen, zusammenhängenden Material gefüllt ist.

2. Bauelement nach Anspruch 1, **dadurch gekennzeichnet, dass** die Verankerungen (2a, 2b) von den Profilen (1a, 1b) nach innen ragende Fußstege (3a, 3b) besitzen, die an ihren inneren Ende Haltstege (4a, 4b) aufweisen, die einander wechselseitig hintergreifen.

3. Bauelement nach Anspruch 2, **dadurch gekennzeichnet, dass** die Haltestege (4a, 4b) beidseitig von den inneren Enden der Fußstege (3a, 3b) abstehen.

4. Bauelement nach einem der Ansprüche 1 bis 3, **dadurch gekennzeichnet, dass** das Metallprofil (1a, 1b) ein offenes Profil mit im wesentlichen glatten/ebenen Außenfläche ist.

5. Bauelement nach einem der Ansprüche 1 bis 4, **dadurch gekennzeichnet, dass** der Raum zwischen den Profilen (1a, 1b) mit einem zwischen die Profile eingebrachten und darin ausgehärteten Kunststoffschaum besteht.

6. Bauelement nach einem der Ansprüche 1 bis 4, **dadurch gekennzeichnet, dass** der Raum zwischen den Profilen (1a, 1b) mit einem zwischen die Profile eingebrachten und darin ausgehärteten Aluminiumschaum besteht.

7. Bauelement nach einem der Ansprüche 1 bis 6, **dadurch gekennzeichnet, dass** zumindest eines der Profile (1a, 1b) aus Metall besteht.

8. Bauelement nach einem der Ansprüche 1 bis 7, **dadurch gekennzeichnet, dass** zumindest eines der Profile (1a bzw. 1b) aus rostfreiem Stahl besteht.

9. Bauelement nach einem der Ansprüche 1 bis 8, **dadurch gekennzeichnet, dass** zumindest eines der Profile aus Aluminium oder einer Aluminiumlegierung besteht.

10. Bauelement nach einem der Ansprüche 1 bis 9, **dadurch gekennzeichnet, dass** das Profil (1a) der ersten Schicht (a) aus einem anderen Material besteht als das Profil (1b) der zweiten Schicht (B).

## Claims

1. Dish-shaped/plate-shaped structural element, composed of a first layer (A), an intermediate layer (C), and a second layer (B),
**characterised in that**
said first layer (A) and said second layer (B) are profiles (1a, 1b) having anchorage couplers (2a, 2b) projecting into said intermediate layer (C), which couplers regionally interlock with the anchorage couplers (2b) associated with the first layer (A), and the space between the profiles and their anchorage couplers is filled with a material that is rigid and cohesive per se.

2. Structural element according to claim 1, **characterised in that** the anchorage couplers (2a, 2b) of the profiles (1a, 1b) have inwardly-projecting base bars (3b, 3b), said base bars having mutually interlocking retention bars (4a, 4b) on their inner ends.

3. Structural element according to claim 2, **characterised in that** the retention bars (4a, 4b) project outwardly from the inner ends of said base bars (3a, 3b) on both sides.

4. Structural element according to one of claims 1 to 3, **characterised in that** the metal profile (1a, 1b) is an open profile with a substantially smooth/plane outer surface.

5. Structural element according to one of claims 1 to 4, **characterised in that** a plastics foam is introduced into the space between said profiles (1a, 1b) and allowed to cure therein.

6. Structural element according to one of claims 1 to 4, **characterised in that** an aluminium foam is introduced into the space between said profiles (1a, 1b) and allowed to harden therein.

7. Structural element according to one of claims 1 to 6, **characterised in that** at least one of said profiles (1a, 1b) is composed of metal.

8. Structural element according to one of claims 1 to 7, **characterised in that** at least one of said profiles (1a or 1b) is composed of stainless steel.

9. Structural element according to one of claims 1 to 8, **characterised in that** at least one of the profiles is composed of aluminium or aluminium alloy.

10. Structural element according to one of claims 1 to 9, **characterised in that** the profile (1a) of the first layer (a) is composed of a material different from that of the profile (1b) of the second layer (B).

## Revendications

1. Composant en forme de cuvette/plaque, constitué d'une première couche ( A ), d'une couche ( C ) intermédiaire ainsi que d'une deuxième couche ( B ),
**caractérisé en ce que**
la première ( A ) et la deuxième ( B ) couches sont un profilé ( 1a, 1b ) ayant des ancrages, qui pénètrent dans la couche ( C ) intérieure, qui s'accrochent par partie dans les ancrages ( 2b ) associés à la première couche ( A ) et l'espace entre les profilés et leurs ancrages est rempli d'un matériau d'un seul tenant, fixe en soi.

2. Composant suivant la revendication 1, **caractérisé en ce que** les ancrages ( 2a, 2b ) ont des barrettes ( 3a, 3b ) formant pied, qui vont des profilés ( 1a, ab ) vers l'intérieur et qui ont à leurs extrémités intérieures des barrettes (4a, 4b) de maintien, qui s'interpénètrent réciproquement.

3. Composant suivant la revendication 2, **caractérisé en ce que** les barrettes ( 4a, 4b ) de maintien dépassent des deux côtés des extrémités intérieures des barrettes ( 3a, 3b ) formant pied.

4. Composant suivant l'une des revendications 1 à 3, **caractérisé en ce que** le profilé ( 1a, 1b ) métallique est un profilé ouvert ayant des surfaces extérieures sensiblement lisses/planes.

5. Composant suivant l'une des revendications 1 à 4, **caractérisé en ce que** l'espace entre les profilés ( 1a, 1b ) est constitué d'une mousse de matière plastique introduite entre les profilés et qui y est durcie.

6. Composant suivant l'une des revendications 1 à 4, **caractérisé en ce que** l'espace entre les profilés ( 1a, 1b ) est constitué d'une mousse d'aluminium introduite entre les profilés et qui y est durcie.

7. Composant suivant l'une des revendications 1 à 6, **caractérisé en ce qu'**au moins l'un des profilés ( 1a, 1b ) est en métal.

8. Composant suivant l'une des revendications 1 à 7, **caractérisé en ce qu'**au moins l'un des profilés ( 1a ou 1b ) est en acier inoxydable.

9. Composant suivant l'une des revendications 1 à 8, **caractérisé en ce qu'**au moins l'un des profilés est en aluminium ou en un alliage d'aluminium.

10. Composant suivant l'une des revendications 1 à 9, **caractérisé en ce que** le profilé ( 1a ) de la première couche ( a ) est en un autre matériau que le profilé ( 1b ) de la deuxième couche ( B ).
